Europäisches Patentamt

European Patent Office

Office européen des brevets

(11) Veröffentlichungsnummer: **0 395 995 A2**

## (12) EUROPÄISCHE PATENTANMELDUNG

(21) Anmeldenummer: 90107735.4

(22) Anmeldetag: 24.04.90

(51) Int. Cl.⁵: **B29C 65/20**

(30) Priorität: 05.05.89 DE 3914826

(43) Veröffentlichungstag der Anmeldung:
07.11.90 Patentblatt 90/45

(84) Benannte Vertragsstaaten:
AT BE CH DE DK ES FR GB GR IT LI LU NL SE

(71) Anmelder: BRÜGMANN FRISOPLAST GMBH
Kanalstrasse 80
D-4600 Dortmund 1(DE)

(72) Erfinder: Brickenstein, Wolf-Jürgen
Am Deverhafen 4
D-2990 Papenburg(DE)

(74) Vertreter: Thielking, Bodo, Dipl.-Ing. et al
Patentanwälte Dipl.-Ing. Bodo Thielking
Dipl.-Ing. Otto Elbertzhagen Gadderbaumer
Strasse 20
D-4800 Bielefeld 1(DE)

(54) Verfahren zum Verschweissen von Profilen, insbesondere Kunststoffprofilen.

(57) Bei einem Verfahren zum Verschweißen von Profilen (1,2) insbesondere von Kunststoffprofilen für Fenster, Türen oder dergleichen, werden die beiden miteinander zu verschweißenden Profilbereiche bis auf Schweißtemperatur erwärmt und nach dem Erwärmen zusammengefügt. Dabei erfolgt eine Erwärmung der Stirnfläche (1a) des ersten Profils und eine Erwärmung der hierzu quer verlaufenden Oberfläche (2a) des zweiten Profils (2). Die Erwärmung des zweiten Profils (2) ist beschränkt auf einen Oberflächenbereich, der nach Lage und Gestalt der Stirnfläche des ersten Profils entspricht. Die Profilierung der Oberfläche des zweiten Profils stimmt zumindest teilweise überein mit der Stirnflächenprofilierung des ersten Profils. Mit diesem Verfahren ist es möglich, unterschiedlich geformte Profile, insbesondere Kunststoffprofile, dicht miteinander zu verschweißen.

Fig. 1

EP 0 395 995 A2

## Verfahren zum Verschweißen von Profilen, insbesondere Kunststoffprofilen

Die Erfindung betrifft ein Verfahren zum Verschweißen von Profilen, insbesondere von Kunststoffprofilen für Fenster, Türen oder dergleichen, bei dem beide miteinander zu verschweißenden Profilbereiche bis auf Schweißtemperatur erwärmt und nach dem Erwärmen zusammengefügt werden.

Bei einer gängigen Technik zur Bildung von Rahmenecken, werden die miteinander zu verbindenen Profile auf Gehrung geschnitten und im Bereich der Gehrungsfuge verschweißt. Diese Technik wird sowohl bei Metallprofilen als auch bei Kunststoffprofilen angewendet.

Ein Verschweißen der Profile im Eckbereich setzt voraus, daß die zu verbindenden Profile im Verschweißbereich gleiche geometrische Ausbildungen aufweisen müssen. Wenn diese Voraussetzung nicht erfüllt ist und unterschiedliche Profilgeometrien vorliegen, war es bisher erforderlich, die Profile durch einen der Verschweißung vorausgehenden Trennschnitt so in Übereinstimmung zu bringen, daß danach die Eckbereiche dicht verschweißt werden konnten. In vielen Fällen war es nicht möglich, den Trennschnitt so auszubilden, daß eine dichte Verschweißung möglich wurde. In diesen Fällen hat man häufig auf das Verschweißen verzichten müssen und die Profile an den Ecken miteinander verschraubt.

Ausgehend von diesem Stand der Technik liegt der Erfindung die Aufgabe zugrunde, ein Verfahren der eingangs erwähnten Art so auszubilden, daß mit seiner Hilfe auch Profile unterschiedlicher Geometrie dicht miteinander verschweißt werden können.

Die Lösung erfolgt mit den Merkmalen des Kennzeichnungsteils von Anspruch 1.

Das erfindungsgemäße Verfahren erlaubt eine dichte Schweißverbindung zur Bildung einer Ecke zwischen zwei Profilen, die unterschiedlich gestaltet sind. Im Gegensatz zu den bisher bekannten Schweißverbindungen liegt dabei die Schweißfuge nicht in der Gehrungsfuge sondern zwischen der üblicherweise geschlossenen Oberfläche des zweiten Profils und der Stirnfläche des ersten Profils. Dabei ist die Stirnfläche des ersten Profils räumlich so gestaltet wie die zur Stirnfläche weisende Oberfläche des zweiten Profils. Wenn beispielsweise die Oberfläche des zweiten Profils eine S-förmige Kontur aufweist, muß die Stirnfläche des ersten Profils, die auf die S-förmige Oberfläche aufgesetzt wird, in gleicher Weise S-förmig ausgebildet sein. Die Stirnfläche des ersten Profils wird üblicherweise vollständig erwärmt, zumindest jedoch in den außen liegenden Randbereichen. Demgegenüber wird die gegenüberliegende Oberfläche des zweiten Profils nur in demjenigen Bereich erwärmt und bei Kunststoff angeschmolzen, auf den nach dem Erwärmen die Stirnfläche des ersten Profils liegt.

Bei einer bevorzugten Ausführungsform der Erfindung erfolgt das Erwärmen der zusammenzufügenden Bereiche mittels eines Schweißspiegels, der zum Eintauchen zwischen die miteinander zu verbindenen Profile und zum Anlegen an die zu erwärmenden Bereiche ausgebildet ist, wobei der Schweißspiegel auf beiden Seiten eine Form aufweist, die der Oberflächenform des zweiten Profils entspricht und wobei der zur Oberfläche des zweiten Profils weisende Bereich des Schweißspiegels in seinem Umriß der Außenkontur des ersten Profils entspricht.

Weitere Merkmale der Erfindung sind in den weiteren Unteransprüchen beschrieben.

Nachstehend wird eine bevorzugte Ausführungsform der Erfindung anhand der Zeichnung im einzelnen beschrieben. Es zeigen:

Figur 1 eine perspektivische Teilansicht eines Teilstücks des ersten Profils und des zweiten Profils mit einem zwischen diesen beiden befindlichen Schweißspiegel,

Figur 2 eine schematische seitliche Darstellung der Profilbereiche während der Erwärmungsphase mittels des Schweißspiegels.

Ein erstes Profil 1 besitzt mehrere Kammern und ist an seinen Seitenflächen mit Rippen und Nuten ausgebildet. Die Stirnfläche des Profils 1 ist mit 1a bezeichnet.

Ein zweites Profil 2 ist an seiner Stirnseite geschlossen dargestellt. Es besitzt eine gewölbte Oberfläche 2a, die in Richtung der Stirnseite 1a des ersten Profils 1 weist.

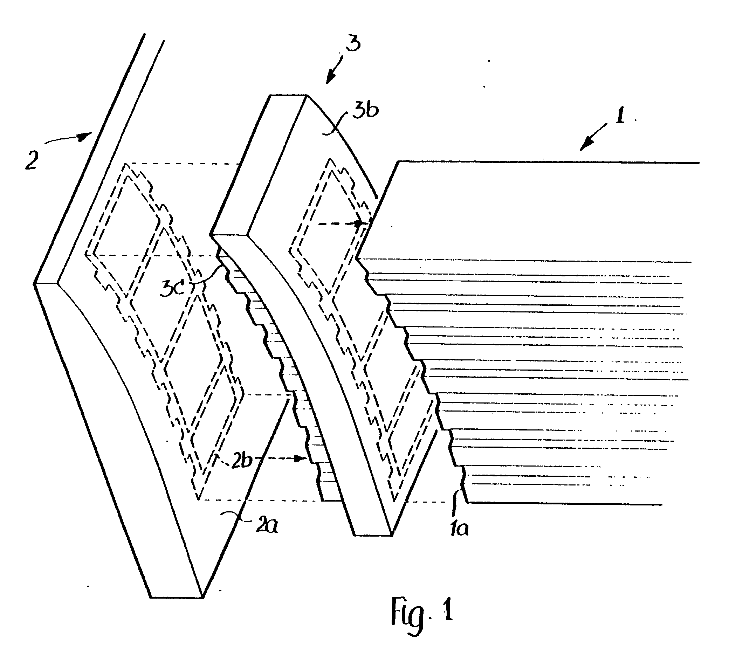

Zwischen der Oberfläche 2a und der Stirnfläche 1a ist ein mit 3 bezeichneter Schweißspiegel vorgesehen. Der Schweißspiegel besitzt an seiner gemäß Figur 1 rechten Seite eine glatte gekrümmte Oberfläche 3b, deren Krümmung identisch der Krümmung der Oberfläche 2a entspricht. Auf der zur Oberfläche 2a weisenden Seite besitzt der Schweißspiegel 3 eine Oberfläche 3c, welche in ihrer Form genau der Außenkontur des ersten Profils 1 entspricht. Darüberhinaus entspricht die Seite 3c in ihrer räumlichen Gestaltung vollständig der Flächenform von 3b und damit sowohl der Flächenform der Oberfläche 2a und der Stirnfläche 1a. Im dargestellten Ausführungsbeispiel handelt es sich bei diesen Flächen um ebene Flächen, die nach oben hin bogenförmig abfallen. Selbstverständlich sind auch andere Oberflächenformen möglich.

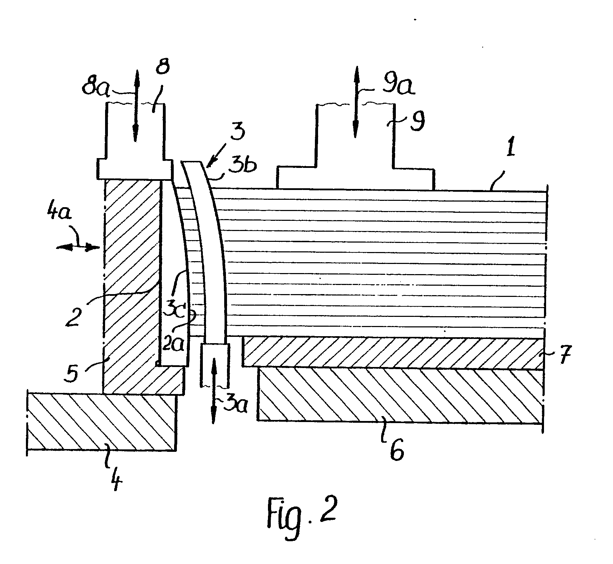

Figur 2 zeigt in schematischer Darstellung die Aufspannung der Profile 1 und 2 auf einem Maschinentisch, wobei in der dargestellten Position der Schweißspiegel mit der Oberfläche 3c an der Oberfläche 2a des zweiten Profils anliegt und mit der Oberfläche 3b an der Stirnfläche 1a des ersten Profils.

Das erste Profil 1 ist mit Hilfe eines schematisch angedeuteten Spannzylinders 9 in der Aufnahme 7 eines feststehenden Maschinentischbereichs 6 gehalten. Neben dem feststehenden Maschinentischbereich 6 befindet sich ein in Richtung des Doppelpfeils beweglicher Maschinentischbereich 4 mit einer Aufnahme 5. In der Aufnahme 5 ist das zweite Profil 2 mit Hilfe des Spannzylinders 8 fixiert.

In der dargestellten Position erwärmen die beiden Oberflächen 3c und 3b des Schweißspiegels 3 die zu erwärmenden Bereiche. Die Stirnfläche 1a des ersten Profils 1 wird vollflächig erwärmt. In Figur 1 ist der von der Oberfläche 3c des Schweißspiegels 3 erwärmte Bereich der Oberfläche 2a gestrichelt dargestellt und mit 2b bezeichnet.

Nach dem Erwärmen der zu verschweißenden Flächen fährt der Maschinentisch 4 gemäß Figur 2 nach links. Es wird der Schweißspiegel 3, der in Richtung des Doppelpfeils 3a beweglich ist, nach unten zwischen den beiden Profilen herausgefahren. Anschließend fährt der Maschinentisch 4a soweit nach rechts vor, daß die angeschmolzene Stirnfläche 1a und der ebenfalls angeschmolzene Bereich 2b direkt aneinander liegen und miteinander verschmelzen können.

Anschließend werden die Spannzylinder 8 und 9 gelöst und die Ecke kann entnommen werden.

## Ansprüche

1. Verfahren zum Verschweißen von Profilen, insbesondere von Kunststoffprofilen für Fenster, Türen oder dergleichen, bei dem beide miteinander zu verschweißenden Profilbereiche bis auf Schweißtemperatur erwärmt und nach dem Erwärmen zusammengefügt werden, dadurch gekennzeichnet, daß die Stirnfläche (1a) des ersten Profils (1) und eine hierzu quer verlaufende Oberfläche (2a) des zweiten Profils (2) erwärmt werden, wobei die Profilierung der Oberfläche (2a) des zweiten Profils (2) zumindest teilweise übereinstimmt mit der Stirnflächenprofilierung des ersten Profils (1a) und die Erwärmung des zweiten Profils (2) beschränkt ist auf einen Oberflächenbereich, der nach Lage und Gestalt der Stirnfläche (1a) des ersten Profils entspricht.

2. Verfahren nach Anspruch 1, dadurch gekennzeichnet, daß das Erwärmen der zusammenzufügenden Bereiche mittels eines Schweißspiegels (3) erfolgt, der zum Eintauchen zwischen die miteinander zu verbindenen Profile (1 und 2) und zum Anlegen an die zu erwärmenden Bereiche ausgebildet ist, wobei der Schweißspiegel (3) auf beiden Seiten (3b und 3c) eine Form aufweist, die der Oberflächenform des zweiten Profils (2) entspricht, wobei der zur Oberfläche (2a) des zweiten Profils (2) weisende Bereich des Schweißspiegels in seinem Umriß der Außenkontur des ersten Profils entspricht.

3. Verfahren nach Anspruch 1 oder 2, dadurch gekennzeichnet, daß das erste Profil (1) und das zweite Profil (2) unter Bildung eines rechten Winkels miteinander verschweißt werden.

4. Verfahren nach einem oder mehreren der Ansprüche 1 bis 3, dadurch gekennzeichnet, daß die zum ersten Profil (1) weisende Oberfläche (2a) des zweiten Profils (2) als glatte Fläche ausgebildet ist.

Fig. 1

Fig. 2

EP 0 395 995 A2